**Europäisches Patentamt**

**European Patent Office**

**Office européen des brevets**

(11) Veröffentlichungsnummer: **0 450 164 A1**

## (12) EUROPÄISCHE PATENTANMELDUNG

(21) Anmeldenummer: 90123515.0

(22) Anmeldetag: 07.12.90

(51) Int. Cl.5: **B30B 9/30**

(30) Priorität: 06.04.90 DE 4011250

(43) Veröffentlichungstag der Anmeldung:
09.10.91 Patentblatt 91/41

(84) Benannte Vertragsstaaten:
**AT BE CH DE DK ES FR GB IT LI NL SE**

(71) Anmelder: **Alois Pöttinger Maschinenfabrik GmbH**

**A-4710 Grieskirchen(AT)**

(72) Erfinder: **Groisböck, Franz**

**A-4710 St. Georgen 44(CH)**

(74) Vertreter: **Dupal, Helmut, Dipl-Ing. et al
Jägerweg 12
A-4702 Wallern(AT)**

(54) **Schneckenpresse.**

(57) Schneckenpresse zum Pressen von Fasergut, mit einer fliegend gelagerten Preßschnecke 3, deren zylindrischer Förderteil 4 in einem Schneckentrog 7 und dessen konischer Preßteil 5 in einem konischen Mundstück läuft, bei dem diese Teile durch ein Übergangsstück 15, das zu den beiden Teilen die Kupplungen 18,18' bildet, verbunden sind, das ebenfalls mit einer Schneckenwindung 16 versehen ist und eine durchgehende Kupplungsbohrung 20 aufweist, in die Kupplungszapfen 19,19' des Förderteiles 4 und des Preßteiles 5 eingesetzt sind, die mit Polygonprofil versehen sind und die mit Gewindestiften 25, die in Einsenkungen der Kupplungszapfen 19,19' greifen, gesichert sind.

Fig. 2

EP 0 450 164 A1

Die Erfindung bezieht sich auf eine Schneckenpresse für das Verpressen von Fasergut, insbesondere Altpapier oder dgl., nach dem Gattungsbegriff des Anspruches 1.

Bei Maschinen dieser Art mit nur einer Preßschnecke tritt von der Spitze derselben her ein starker abrasiver Angriff durch das Gut auf, der zur zunehmenden Abtragung an den am stärksten belasteten Stellen führt, wodurch die Kanten der Schneckenwindungen und die Förderflächen und damit die Windungen selbst zunehmend abgetragen werden. Dieser Vorgang greift dann zunehmend auf noch nicht erodierte Teile der Schneckenwindung am Förderteil der Preßschnecke über.

Weiters kommt es vor, daß durch Einwirkung größerer Fremdkörper Beschädigungen der Preßschnecke auftreten, die sich nicht auf deren konischen, in den Förderteil eingesetzten Preßteil beschränken, sondern auch an dem Förderteil selbst auftreten, was dann sehr aufwendige Austauscharbeiten erforderlich macht und teuer ist.

Eine Maschine dieser Art ist aus der DE-OS 38 06 146 bekannt, deren Preßschnecke geteilt ausgeführt ist und bei der in den zylindrischen Förderteil, der in einem offenen Fördertrog läuft, in eine axiale Kupplungsbohrung, die mit Polygonprofil versehen ist, ein konischer Preßteil mit einem Kupplungszapfen eingesetzt ist, der ebenfalls Polygonprofil aufweist, wobei diese Kupplung mit Gewindestiften, die in Eindrehungen oder Einsenkungen des Kupplungszapfens greifen, gesichert ist.

Aufgabe der Erfindung ist es die beschriebenen Nachteile zu vermeiden und mit einfachen Mitteln Vorkehrungen zu treffen, die bei Beschädigung oder Abtragungen an dem vorderen zylindrischen Teil der Preßschnecke aufwendige Austauscharbeiten überflüssig machen.

Diese Aufgabe wird bei einer Maschine der eingangs beschriebenen Art mit den Merkmalen des Anspruches 1 gelöst.

Durch die Zwischenschaltung eines Übergangsstückes, das mit einer durchgehenden Kupplungsbohrung versehen ist,ist es möglich, bei Beschädigungen oder Verschleiß an dem Übergangsstück, das bereits im Bereich des Fördertroges liegt, dieses rasch und einfach auszuwechseln.

Besonders einfach in der Herstellung ist es, wenn das Übergangsstück mit einer durchgehenden Bohrung versehen ist, besonders dann, wenn seine Länge günstigerweise etwa der Länge der beiden Kupplungszapfen entspricht.

Dei Anwendung des Übergangsstückes ermöglicht gleichzeitig die Verwendung einer niedrigeren Steigung, ohne daß dadurch der Herstellungsaufwand besonders steigt, wodurch eine besser abgestimmte Zufuhr von Preßgut zu dem Preßteil und dem Mundstück der Schneckenpresse möglich ist.

Sehr wichtig ist es, daß die aneinanderstoßenden Windungen der Bauteile der Preßschnecke eine kantenlose Fügung ergeben, um Stellen, von denen Erosion oder Verstopfungen ausgehen, zu vermeiden.

Die Sicherung der Kupplungen geschieht in zuverlässiger, einfach lösbarer Weise mittels Gewindestiften, die in Gewindebohrungen zumindest bündig eingeschraubt sind.

Zur Herabsetzung des Verschleißes ist die Anwendung von zähem, verschleißfestem Material von Vorteil, um besonders die Abtragung an den Förderflächen zu verringern.

Das Übergangsstück befindet sich im Förderbereich der Preßschnecke und ist dazu mit einem zylindrischen Schneckenkern versehen, durch den die Möglichkeit geschaffen ist eine durchgehende Kupplungsbohrung mit gleichbleibenden Abmessungen anzubringen.

Die Erfindung wird nachstehend an Hand der Zeichnung einer erfindungsgemäßen Ausführung der Maschine beschrieben.

Es zeigt

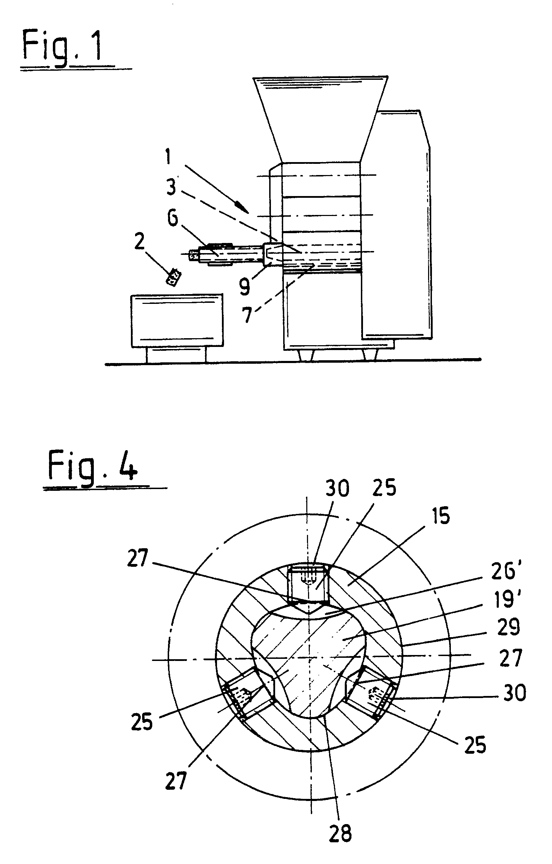

Fig. 1   die Seitenansicht einer Maschine mit Schneckenpresse, schematisch,

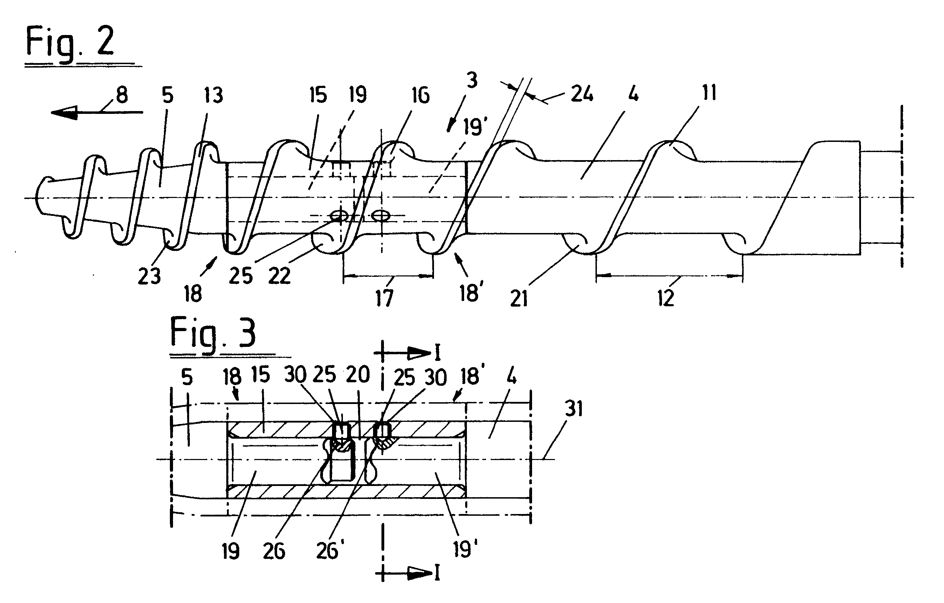

Fig. 2   die Preßschnecke der Schneckenpresse in Seitenansicht,

Fig. 3   einen Schnitt durch das Übergangsstück der Preßschnecke und

Fig. 4   einen Querschnitt durch das Übergangsstück nach I-I

Die Schneckenpresse 1 zum Pressen von faserigem Gut ist mit einer Preßschnecke 3 versehen, die aus einem zylindrischen Förderteil 4, der in einem oben offenen Schneckentrog läuft und aus einem daran anschließenden, sich konisch verjüngenden Preßteil 5, der in einem sich in Förderrichtung 8 konisch verjüngenden Mundstück 9 mit einem geringen Umfangsspalt läuft, besteht. Zwischen dem zylindrischen Förderteil 4 und dem sich konsich verjüngenden Preßteil 5 ist ein zylindrisches Übergangsstück 15 eingesetzt, das sich im Schneckentrog 7 befindet.

Der Förderteil 4, das Übergangsstück 15 und der Preßteil 5 der Preßschnecke 3 sind über Kupplungen 18,18' miteinander verbunden.

Die Kupplungen 18,18' bestehen aus einer durchgehenden Kupplungsbohrung 20 mit Polygonprofil und je einem Kupplungszapfen 19,19' an dem Förderteil 4 und dem Preßteil 5, die ebenfalls mit einem Polygonprofil versehen sind, so daß eine flache tragende Verbindung entsteht, die mit senkrecht zur Achse 31 der Preßschnecke 3 in Gewindebohrungen 30 des Übergangsstückes 15 eingeschraubten, je drei, um 120 Winkelgrade versetzten Gewindestiften 25 gesichert ist, die in Einsenkungen 26,26' der Kupplungszapfen 19,19' an den Scheitelpunkten 27 der Polygonflächen 28 der Kupplungszapfen 19,19' gesichert sind.

Die Preßschnecke 3 ist mit einer Schneckenwindung versehen, wobei die Schneckenwindung 11 des Förderteiles 4 eine größere Steigung 12 aufweist als die Schneckenwindung 16 des Übergangsstückes 15 und diese wiederum eine größere Steigung 17 besitzt als die Schneckenwindung 13 des Preßteiles 5.

Die Schneckenwindungen 11,13,16 schließen mit ihren Förderflanken 21,22 und 23 jeweils bündig aneinander, oder die Schneckenwindung 11 des Förderteiles 4 ist zur Schneckenwindung 16 des Übergangsstückes 15 und diese gegen die Schneckenwindung 13 des Preßteiles 5 um einen Bruchteil der Windungsstärke 24 in Drehrichtung der Preßschnecke 3 versetzt gearbeitet.

Das Übergangsstück 15, das im wesentlichen noch Förderaufgaben besitzt, ist mit einem zylindrischen Schneckenkern 29 versehen.

Dadurch ist es möglich, die Teile der preßschnecke 3 aus unterschiedlich verschleißfestem Material herzustellen, wobei das teuerste, verschleißfesteste Material für den Preßteil 5 verwendet wird.

An das Mundstück 9 schließt sich eine Preßzange 6 mit Preßbacken an, aus der die Preßlinge 2 schließlich verdichtet abgegeben werden.

Legende :

| | |
|---|---|
| 1 | Schneckenpresse |
| 2 | Preßlinge |
| 3 | Preßschnecke |
| 4 | zylindrischer Förderteil |
| 5 | konischer Preßteil |
| 6 | Preßzange aus Preßbacken bestehend |
| 7 | oben offener Schneckentrog |
| 8 | Förderrichtung |
| 9 | konisch verjüngendes Mundstück |
| 10 | |
| 11 | Schneckenwindung des Förderteiles 4 |
| 12 | Steigung der Schneckenwindung 11 |
| 13 | Schneckenwindung des Preßteiles 5 |
| 14 | Steigung der Schneckenwindung 13 |
| 15 | Übergangsstück der Preßschnecke 3 |
| 16 | Schneckenwindung des Übergangsstückes 15 |
| 17 | Steigung der Schneckenwindung 16 |
| 18,18' | Kupplung zwischen Preßteil 5 und dem Übergangsstück 15 und zwischen diesem und dem Förderteil 4 |
| 19,19' | Kupplungszapfen des Preßteiles 5 und des Förderteiles 4 |
| 20 | Kupplungsbohrung des Übergangsstückes 15 |
| 21 | Förderflanke der Schneckenwindung 11 des Förderteiles 4 |
| 22 | Förderflanke der Schneckenwindung 13 des Preßteiles 5 |
| 23 | Förderflanke der Schneckenwindung 16 des Übergangsstückes 15 |
| 24 | Windungsstärke der Schneckenwindung 11 |
| 25 | Gewindestift des Übergangsstückes 15 |
| 26,26' | Einsenkungen am Kupplungszapfen 19 des Preßteiles 5 und Einsenkungen am Kupplungszapfen 19' des Förderteiles 4 |
| 27 | Scheitelpunkt |
| 28 | Polygonflächen der Kupplungszapfen 19,19' |
| 29 | Schneckenkern des Übergangsstükkes 15 |
| 30 | Gewindebohrungen des Übergangsstückes 15 für die Gewindestifte 25 |
| 31 | Achse der Preßschnecke 3 |

**Patentansprüche**

1. Schneckenpresse für das Verpressen von faserigem Material, insbesondere Altpapier, Kartonagen oder dgl., mit einer Preßschnecke, die aus einem zylindrischen Förderteil, der in einem, für die Zuführung von Preßgut offenen Schneckentrog läuft und aus einem konischen Preßteil, der in einem sich in Förderrichtung konisch verjüngenden Mundstück mit engem Umfangsspalt läuft und die mit dem Förderteil fliegend gelagert und an dieser Seite von einem Motor über ein Getriebe angetrieben ist und bei der die Schneckenwindung des Förderteiles eine größere Steigung aufweist als die Schneckenwindung des Preßteiles,der aus besonders verschleißfestem Material hergestellt ist und über eine großflächige Kräfte übertragende Kupplung mit dem Förderteil verbunden ist, wobei der Preßteil mit einem Kupplungszapfen versehen ist, der ein Polygonprofil aufweist, der in eine Polygonbohrung des Förderteiles eingreift und mittels mehrerer Gewindestifte gesichert ist, wobei die Schnekkenwindung des Preßteiles mit der Förderflanke bündig an die Förderflanke der Schneckenwindung des Förderteiles anschließt oder in Drehrichtung der Preßschnecke um ein im Verhältnis zur Windungsstärke geringes Maß nacheilend versetzt ist, dadurch gekennzeichnet, daß zwischen dem Preßteil (5) und dem Förderteil (4) ein Übergangsstück (15) eingesetzt ist, das mit Kupplungsbohrungen (20) mit Polygonprofil versehen ist, in die die Kupplungszapfen (19,19') mit Polygonprofil des Preßteiles (5) und des Förderteiles (4) eingesetzt sind.

2. Schneckenpresse nach dem vorhergehenden Anspruch, dadurch gekennzeichnet, daß das Übergangsstück (15) mit einer durchgehenden Kupplungsbohrung (20) versehen ist, die die Kupplungszapfen (19,19') des Preßteiles (5) und des Förderteiles (4) aufnimmt.

3. Schneckenpresse nach einem der vorhergehenden Ansprüche, dadurch gekennzeichnet, daß das Übergangsstück (15) eine Schneckenwindung (16) geringerer Steigung als die Schneckenwindung (11) des Förderteiles (4) und größerer Steigung als die Schneckenwindung (13) des Preßteiles (5) aufweist.

4. Schneckenpresse nach einem der vorhergehenden Ansprüche, dadurch gekennzeichnet, daß das Übergangsstück (15) mit der Förderflanke (23) der Schneckenwindung (16) bündig an die Förderflanke (21) der Schneckenwindung (11) des Förderteiles (4) anschließt, oder um ein, im Verhältnis zur Windungsstärke (24) geringes Maß nacheilend versetzt ist.

5. Schneckenpresse nach einem der vorhergehenden Ansprüche, dadurch gekennzeichnet, daß das Übergangsstück (15) mittels senkrecht zur Achse (31) der Preßschnecke (3) eingeschraubter Gewindestifte (25) in den Einsenkungen (26,26') an den Scheitelpunkten (27) der Polygonflächen (28) gesichert ist.

6. Schneckenpresse nach einem der vorhergehenden Ansprüche, dadurch gekennzeichnet, daß das Übergangsstück (15) aus einem verschleißfesteren Material als das Förderteil (4) hergestellt ist.

7. Schneckenpresse nach einem der vorhergehenden Ansprüche, dadurch gekennzeichnet, daß daß das Übergangsstück (15) mit einem zylindrischen Schneckenkern (29) ausgestattet ist, in dem die Gewindebohrungen (30) für die Gewindestifte (25) angelegt sind.

Fig. 1

Fig. 4

# Fig. 2

# Fig. 3

EP 0 450 164 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | EP-A-0 330 003 (ALOIS PÖTTINGER MASCH. GMBH) * das ganze Dokument & DE-A-3 806 146 (ALOIS PÖTTINGER) * | 1-5 | B 30 B 11/24 B 30 B 9/30 |
| Y | FR-A-1 126 425 (COMPANIA DE MAQUINARIA ACEITERA) * Zusammenfassung; Abbildungen * | 1-5 | |
| A | DE-C-2 340 499 (BARMAG BARMER AG) * Ansprüche; Abbildungen * | 1-3 | |
| A | US-A-3 998 318 (F. MC ALARNEY) * Spalte 2, Zeile 56 - Spalte 4, Zeile 15; Abbildungen * | 1-2,6-7 | |
| A | DE-A-2 513 015 (RHEINSTAHL AG) * Ansprüche; Abbildungen * | 1-2 | |
| A | GB-A-1 072 203 (WERNER & PFLEIDERER) * das ganze Dokument * | 1,6 | |

RECHERCHIERTE SACHGEBIETE (Int. Cl.5)

B 30 B
B 29 C
B 28 B

Der vorliegende Recherchenbericht wurde für alle Patentansprüche erstellt

| Recherchenort | Abschlußdatum der Recherche | Prüfer |
|---|---|---|
| Den Haag | 08 August 91 | VOUTSADOPOULOS C. |